# NEUE EUROPÄISCHE PATENTSCHRIFT

(11) **EP 2 379 439 B2**
(45) Veröffentlichungstag und Bekanntmachung des Hinweises auf die Entscheidung über den Einspruch: **22.04.2020**
(45) Hinweis auf die Patenterteilung: 06.04.2016
(21) Anmeldenummer: 09771505.6
(22) Anmeldetag: 27.11.2009
(51) Int. Cl.: B67B 3/26, G01N 21/90

(54) **VERFAHREN SOWIE INSPEKTIONSVORRICHTUNG ZUM ÜBERPRÜFEN VON BEHÄLTERN**
METHOD AND INSPECTION DEVICE FOR TESTING CONTAINERS
PROCÉDÉ AINSI QUE DISPOSITIF D'INSPECTION POUR VÉRIFIER DES RÉCIPIENTS

(30) Priorität: 17.12.2008 DE 102008062385
(43) Veröffentlichungstag der Anmeldung: 26.10.2011
(73) Patentinhaber: KHS GmbH, 44143 Dortmund (DE)
(72) Erfinder: WIEMER, Heinrich, 21033 Hamburg (DE); BÖCKER, Horst, 58239 Schwerte (DE); HERRMANN, Jürgen, 57520 Rosenheim (DE)
(74) Vertreter: Kalkoff & Partner Patentanwälte PartmbB
(86) Internationale Anmeldenummer: PCT/EP2009/008462
(87) Internationale Veröffentlichungsnummer: WO 2010/075918

(56) Entgegenhaltungen:
- EP-A2- 1 293 473
- WO-A1-03/016886
- WO-A1-2004/113221
- GB-A- 2 135 447
- GB-A- 2 173 299
- JP-A- H09 169 392
- JP-A- 2006 300 711

## Beschreibung

Die Erfindung bezieht sich auf ein Verfahren gemäß Oberbegriff Patentanspruch 1 sowie auf eine Inspektionsvorrichtung gemäß Oberbegriff Patentanspruch 8 , und wie aus der JPH-9169392 bekannt.

Es ist allgemein üblich und bekannt gefüllte Behälter an ihrer jeweiligen Behälteröffnung mit einem Behälterverschluss zu verschließen, der zugleich auch mit einem Sicherungselement versehen ist, welches die Qualität und Originalität des jeweiligen Produktes sichert und daher nachstehend als Originalitätssicherungselement bezeichnet wird. Beim maschinellen Verschließen der Behälter verriegelt sich das Originalitätssicherungselement formschlüssig an dem jeweiligen Behälter, sodass ein Öffnen des Behälters bzw. des Behälterverschlusses ausschließlich nur unter Abtrennen des Originalitätssicherungselementes vom Verschluss und/oder unter Zerstören dieses Elementes möglich ist, wodurch das Öffnen des Behälters sicher und zweifelsfrei angezeigt ist.

Bei maschinell verarbeitbaren Behälterverschlüssen, insbesondere auch bei kappenartigen Verschlüssen für Flaschen oder dergleichen Behälter ist das Originalitätssicherungselement in der Regel von einem Qualitäts- oder Originalitätssicherungsring gebildet, der z.B. an der offenen Seite des kappenartigen Behälterverschlusses oder des Verschlusskörpers vorgesehen ist und der beim Aufbringen des Behälterverschlusses, beispielsweise beim Aufschrauben des als Schraubverschluss ausgebildeten Behälterverschlusses auf einen Behälter diesen im Bereich seiner Behälteröffnung und/oder an seinem Behälterhals formschlüssig hintergreift.

Insbesondere auch bei Schraubverschlüssen für ein maschinelles Verschließen von Behältern ist bekannt, den jeweiligen Originalitätssicherungsring einstückig mit dem Verschlusskörper des Behälterverschlusses zu fertigen und dabei zwischen dem Originalitätssicherungsring und dem Verschlusskörper wenigstens eine ringförmige Sollbruchlinie vorzusehen sowie den Originalitätssicherungsring auch so auszuführen, dass er aus mehreren Ringsegmenten besteht, die über Sollbruchabschnitte mit einander verbunden sind. Die Sollbruchlinien und - abschnitte sind beispielsweise durch Reduzierung der Materialdicke und/oder durch Perforation gebildet, sodass beim Öffnen des Behälterverschlusses nicht nur ein Lösen des Originalitätssicherungsringes von der Verschlusskappe, sondern auch eine Beschädigung dieses Sicherungselementes erfolgt.

Da Originalitätssicherungselemente also konstruktiv so ausgelegt sind, dass sie bei Belastung zerstört werden, lässt sich nicht völlig verhindern, dass Sicherungselemente vereinzelt bereits beim maschinellen Verschließen der Behälter beschädigt werden, was dann zu Irritationen und Reklamationen u.a. beim Handel und bei Verbrauchern sowie auch zu erhöhten Kosten führt. Derartige Beschädigungen der Originalitätssicherungselemente sind somit unerwünscht.

Aufgabe der Erfindung ist es, ein Verfahren aufzuzeigen, mit welchem Irritationen und Reklamationen bedingt durch beschädigte Originalitätssicherungselemente an Behältern zuverlässig vermieden werden können. Zur Lösung dieser Aufgabe ist ein Verfahren entsprechend dem Patentanspruch 1 ausgebildet. Eine Inspektionsvorrichtung zum Durchführen dieses Verfahrens ist Gegenstand des Patentanspruchs 8.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:

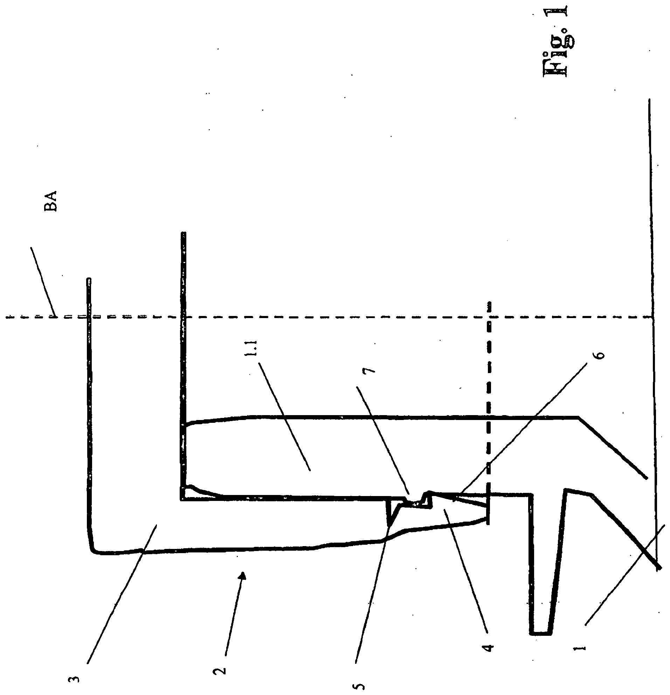

- Fig. 1: in vereinfachter schematischer Teildarstellung und im Schnitt einen auf einer Behälter- oder Flaschenmündung angeordneten Behälterverschluss mit Originalitätssicherungsring;

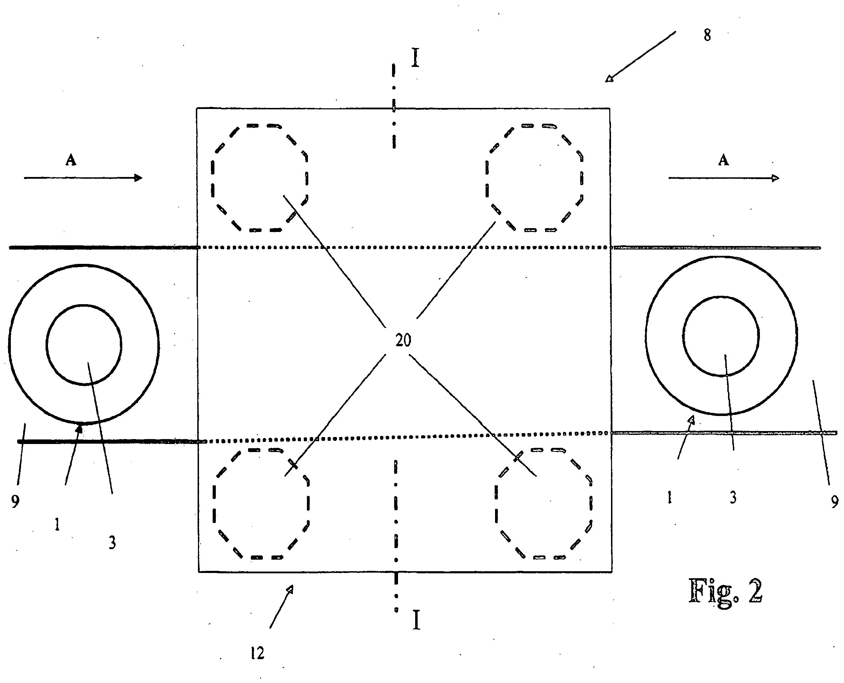

- Fig. 2: in Draufsicht auf eine Inspektionsvorrichtung gemäß der Erfindung zur Überprüfung der Originalitätssicherungsringe der verschlossenen Behälter;

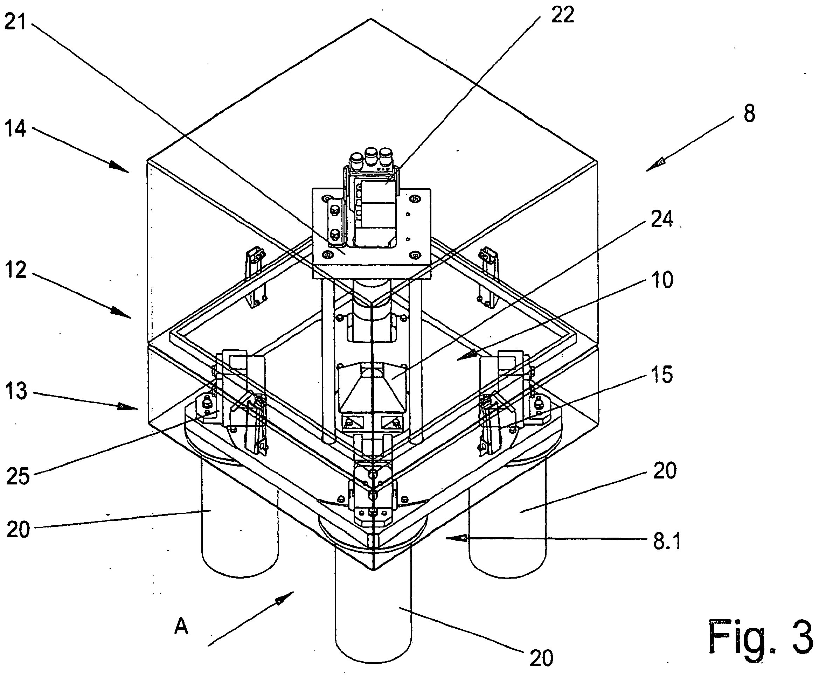

- Fig. 3: die Inspektionsvorrichtung der Figur 2 in perspektivischer Darstellung;

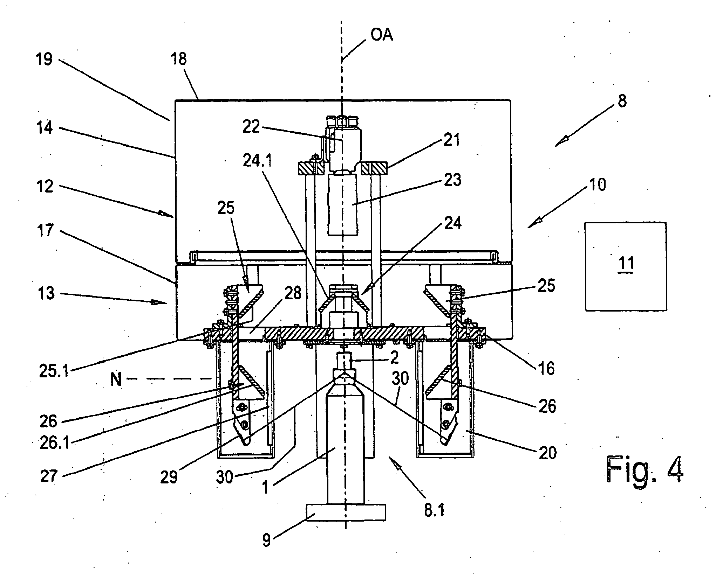

- Fig. 4: einen Schnitt entsprechend der Linie I - I der Figur 2.

In den Figuren sind 1 Behälter in Form von Flaschen, die vorzugsweise aus einem lichtdurchlässigen oder transluzentem Material, z.B. aus Glas oder einem transluzenten Kunststoff (beispielsweise PET) bestehen und nach dem Füllen mit einem flüssigen Füllgut, beispielsweise mit einem Getränk, jeweils mit einem kappenartigen Behälterverschluss 2 verschlossen wurden, beispielsweise durch Aufschrauben des Behälterverschlusses 2 oder dessen Verschlusskörpers 3 auf ein Außengewinde an einem Behälterhals 1.1.

Jeder Behälterverschluss 2 besteht in bekannter Weise aus dem kappenartigen Verschlusskörper 3 und einem Originalitätssicherungsring 4, der über eine eine Verschluss- und Behälterachse BA konzentrisch umschließende ringförmige Sollbruchlinie 5, die von einer Perforation mit mehreren entlang der Sollbruchlinie 5 aufeinander folgenden schlitzartigen Durchbrüchen gebildet ist, einstückig mit dem Verschlusskörper 3 hergestellt ist, und zwar beispielsweise aus Kunststoff oder einem metallischen Werkstoff. An der Innenseite ist der Originalitätssicherungsring 4 mit mehreren Vorsprüngen oder Rasten 6 versehen, die um die Achse des Verschlusses verteilt angeordnet sind und einen über die Umfangsfläche der Behältermündung 1 wegstehenden ringartigen Vorsprung 7 formschlüssig hintergreifen, so dass ein Öffnen des Behälters 1 nur durch zumindest teilweises Abtrennen des Originalitätssicherungsringes 4 entlang der Sollbruchlinie 5 und/oder durch zumindest teilweises Zerstören des Originalitätssicherungsringes 4 möglich ist.

Da die Behälterverschlüsse 2 so ausgelegt sind, dass deren Originalitätssicherungsringe 4 in der vorstehend beschriebenen Weise beim Öffnen, d.h. bei der dabei auftretenden Belastung zerstört werden, kommt es beim maschinellen Verschließen der Behälter 1 vereinzelt vor, dass der Originalitätssicherungsring 4 während des Verschließvorgangs, beispielsweise während des Aufschraubens auf den Behälterhals 1.1 beschädigt werden und dadurch der Eindruck entsteht, der betreffende Behälter sei bereits geöffnet worden.

In den Figuren ist allgemein mit 8 eine Inspektionsvorrichtung dargestellt, mit der die Behälter 1 nach dem Füllen und Verschließen in Bezug auf die Unversehrtheit der Originalitätssicherungsringe 4 an den Behälterverschlüssen überprüft werden. Dabei erfolgt die Inspektion der Behälter bzw. der Originalitätssicherungsringe 4 vorzugsweise bevor jeder verschlossene Behälter 1 einer weiteren Verwendung zugeführt wird, beispielsweise einer Etikettiermaschine, einer Maschine zum Einbringen der Behälter 1 in Transportkästen (Flaschenkästen) und/oder zur Bildung von Gebinden aus mehreren Behältern usw. Folglich ist es von besonderem Vorteil, wenn die Überprüfung auf die Unversehrtheit der Originalitätssicherungsringe 4 vor der Auslieferung oder dem Versand der gefüllten und verschlossenen Behälter 1 an Abnehmer, beispielsweise an Getränkemärkte usw. erfolgt.

Für die Überprüfung werden die Behälter 1 beispielsweise auf einem Transporteur 9 aufrecht stehend, d.h. mit ihrer Behälterachse BA in vertikaler Richtung orientiert, kontinuierlich oder aber getaktet in einer Transportrichtung A durch die Inspektionsvorrichtung 8 und dabei auch durch eine Mess- und Kontrollposition 8.1 dieser Vorrichtung bewegt, an der (Mess- und Kontrollposition) der jeweilige Originalitätssicherungsring 4 mit einem opto-elektrischen Sensorsystem 10 erfasst wird, sodass die von diesem Sensorsystem 10 gelieferten Bilddaten als Ist-Daten in einer von einem Rechner gebildeten oder rechnergestützten Bildverarbeitung 11 verarbeitet werden können. Hierbei werden die von dem Sensorsystem 10 von jedem überprüften Originalitätssicherungsring 4 gelieferten Ist-Daten ausgewertet. Beispielsweise werden die von jedem überprüften Originalitätssicherungsring 4 gelieferten Ist-Daten mit in einem Speicher der Bildverarbeitung 11 abgelegten Soll-Daten oder -Werten verglichen. Wird ein Fehler an einem Originalitätssicherungsring 4 festgestellt, so veranlasst die Bildverarbeitung 11 beispielsweise ein Fehlersignal, welches dann z.B. dazu führt, dass der den Verschluss mit dem fehlerhaften Originalitätssicherungsring 4 aufweisende Behälter 1 aus der Produktlinie einer die Inspektionsvorrichtung 8 aufweisenden Anlage ausgeschleust wird.

Im Einzelnen umfasst die Inspektionsvorrichtung 8 bei der dargestellten Ausführungsform ein zweiteiliges Gehäuse 12, in welchem das Sensorsystem 10 untergebracht ist und welches im Wesentlichen aus einem massiven Gehäuseunterteil 13 und aus einem Gehäuseoberteil 14 besteht, welches über Spannverschlüsse 15 abnehmbar am Gehäuseunterteil 13 befestigt ist. Das Gehäuseunterteil 13 ist relativ massiv und wannenartig mit einem quadratischen Boden 16 und einer Umfangswand 17 ausgebildet. Das das Gehäuseteil 13 an der offenen Oberseite verschließende Gehäuseteil 14 ist haubenartig mit einer quadratischen oberen Wandung 18 und einer Umfangswand 19 ausgebildet.

Das somit in Draufsicht quadratische Gehäuse 12 ist mit vier jeweils als Hohlzylinder ausgebildeten Fußelementen 20 mit seiner von dem Boden 16 gebildeten Gehäuseunterseite oberhalb der Bewegungsbahn der durch die Inspektionsvorrichtung 8 hindurchbewegten Behälter 1 angeordnet. Die Fußelemente 20 befinden sich seitlich von dem Transporteur 9 im Bereich der Ecken des quadratischen Bodens 16. Weiterhin ist die Anordnung so getroffen, dass zwei Umfangseiten des Gehäuses 12 parallel zur Förderrichtung A des Transporteurs 9 und zwei Umfangsseiten des Gehäuses 12 senkrecht zu der Transportrichtung A orientiert sind.

Im Inneren des Gehäuses 12 ist an einem Traggerüst 21 eine elektronische Kamera 22 mit Optik 23 angeordnet, und zwar derart, dass die Kamera 22 und die Optik 23 mit ihrer optischen Achse OA in vertikaler Richtung orientiert sind. Die optische Achse OA bildet die Symmetrieachse des Sensorsystems 10 und auch die Achse der Mess- und Kontrollposition 8.1 in der Form, dass jeder Behälter 1, der diese Mess- und/oder Kontrollposition 8.1 erreicht hat, mit seiner Behälterachse BA achsgleich oder im Wesentlichen achsgleich mit der Achse OA angeordnet ist.

Bei der dargestellten Ausführungsform liegen weiterhin der Schnittpunkt der Diagonalen des quadratischen Gehäusebodens 16 sowie der Schnittpunkt der Verbindungslinien zwischen den Achsen solcher Fußelemente 20, die sich bezogen auf den quadratischen Gehäuseboden 16 diagonal gegenüber liegen, ebenfalls auf der optischen Achse OA.

Unterhalb der mit der Optik 23 auf den Gehäuseboden 16 gerichteten und von diesem in vertikaler Richtung beabstandeten Kamera 22 ist ein optisches Strahlumlenkelement in Form eines Mehrfachspiegels 24 vorgesehen, welcher an seinem nach Art einer Pyramide mit einem quadratischen Grundriss ausgebildeten Spiegelkörper vier Spiegelflächen 24.1 aufweist. Der Mehrfachspiegel 24 ist mit seiner Achse in der optischen Achse OA so angeordnet, dass jeder Spiegelflächen 24.1 eine Spiegelfläche 25.1 eines Spiegels 25 mit Abstand gegenüberliegt, welcher innerhalb des Gehäuses 12 und oberhalb eines der Fußelementes 20 angeordnet ist. Der Spiegelfläche 25.1 liegt die Spiegelfläche 26.1 eines Spiegels 26 gegenüber, der in dem betreffenden Fußelement 20 hinter einem in diesem Fußelement vorgesehenen und durch eine Schutzscheibe aus einem glasklareren Werkstoff, beispielsweise aus Glas verschlossenen Fenster 27 angeordnet ist. Zwischen den beiden Strahlumlenkelementen oder Spiegeln 25 und 26 ist im Boden 16 eine Öffnung 28 vorgesehen.

Der jeweilige Spiegel 26 bzw. dessen Spiegelfläche 26.1 befinden sich auf einem Höhenniveau N, auf dem auch die zu überprüfenden Originalitätssicherungsringe 4 der Behälter 1 durch die Mess- und/oder Kontrollposition 8.1 bewegt werden. Über die Spiegelflächen 24.1, 25.1, 26.1 erfolgt eine mehrfache Umlenkung der den jeweiligen Originalitätssicherungsring 4 an der Mess- und/oder Kontrollposition 8.1 abbildenden Strahlen um jeweils 90°, sodass sich ein Strahlenverlauf ausgehend von der Mess- und/oder Kontrollposition 8.1 zunächst bezogen auf die optische Achse OA radial nach außen, anschließend durch Umlenkung an der Spiegelfläche 26.1 parallel zur optischen Achse OA nach oben durch die Öffnung 28 an die Spiegelfläche 25.1, von dieser bezogen auf die optische Achse OA radial nach innen an eine der Spiegelflächen 24.1 und dort umgelenkt in die Optik 23 der Kamera 22 ergibt. Durch die Anordnung der Spiegel 26 erfolgt eine bildliche Erfassung der Originalitätssicherungsringe 4 von der Seite her. Bei entsprechender Ausbildung des Sensorsystems 10 oder bei entsprechender Anordnung der Spiegel 26 ist auch eine Erfassung der Originalitätssicherungsringe 4 in einer anderen Blickrichtung, beispielsweise schräg von oben oder schräg von unten möglich.

In dem Fußelement 20 ist unterhalb des Spiegels 26 hinter dem Fenster 27 und damit ebenfalls gegen Verschmutzen geschützt eine Lichtquelle 29 vorgesehen, die einen stark fokussierten Lichtstrahl 30 aussendet. Dieser ist ausgehend von der Lichtquelle 29 schräg nach oben gerichtet und schneidet die optische Achse OA. Der Lichtstrahl 30 beleuchtet den jeweiligen Behälterverschluss 2 zumindest an seinen den Originalitätssicherungsring 4 aufweisenden Bereich an der Behälterverschluss-Innenseite, und zwar durch den Behälter 1 und in bestimmten Anwendungsfällen auch durch das in dem Behälter 1 aufgenommene Füllgut hindurch, also von der Innenseite des Behälter 1 her, sodass von der Behälteraußenseite her gesehen der Behälterverschluss 2 und dabei insbesondere der Originalitätssicherungsring 4 als von hinten beleuchtet erscheinen. Um dies zu erreichen, trifft der Lichtstrahl 30 vorzugsweise in einer Richtung auf die dem Behälterinnenraum zugewandte Seite des Originalitätssicherungsringes 4 auf, die (Richtung) achsgleich mit der optischen Achse des Spiegels 26 des jeweiligen von den Spiegeln 25 und 26 gebildeten Spiegelsystems ist oder aber einen Winkel deutlich kleiner als 90° mit dieser optischen Achse einschließt.

Die von den Spiegeln 25 und 26 gebildete Spiegelanordnung ist vierfach vorgesehen, d.h. über jedem Fußelement 20 und der dort vorgesehenen Öffnung 28 ist ein Spiegel 25 angeordnet, dem im Fußelement 20 ein Spiegel 26 zugeordnet ist. Weiterhin ist in jedem Fußelement 20 eine Lichtquelle 29 zum Aussenden des stark gebündelten Lichtstrahles 30 vorgesehen, und zwar derart, dass der Behälterverschluss 2 des jeweils an der Mess- und/oder Kontrollposition 8.1 befindlichen Behälters 1 im Bereich seines Originalitätssicherungsringes 4 für die Abbildung über jeweils einen Spiegel 26 durch die Lichtquelle 29 von hinten beleuchtet wird, die in dem diesen Spiegel 26 diagonal gegenüber liegenden Fußelement 20 vorgesehen ist.

Durch Schwenken der Lichtquelle 29 sind die Strahlen 30 so einstellbar, dass durch diese Einstellung auch die Brechung, die diese Lichtstrahlen 30 beim Eintritt in den jeweiligen Behälter 1 an dessen Mantel- oder Umfangsfläche sowie an der Grenzfläche zwischen der Behälterwandung und dem flüssige Füllgut erfahren, für eine optimale Beleuchtung der Originalitätssicherungsringe 4 von hinten berücksichtigt werden kann.

Durch die Beleuchtung der Originalitätssicherungsringe 4 von hinten, d.h. von der Innenseite des jeweiligen Behälters 1 her ergibt sich durch das so erzeugte Durchlicht eine besonders kontrastreiche 360°-Abbildung des jeweiligen mit der Kamera 22 über die Spiegel 24, 25 und 26 erfassten Originalitätssicherungsringes 4 und dadurch die Möglichkeit, eventuelle Fehler oder Beschädigungen an Originalitätssicherungsringen 4 in der Bildbearbeitung 11 zuverlässig festzustellen. Die Beleuchtung des jeweiligen Originalitätssicherungsringes 4 von hinten führt u.a. auch deswegen zu besonders kontrastreichen und eindeutigen Aufnahmen, weil die Behälterverschlüsse 2 in der Regel aus einem Werkstoff bestehen, der lichtundurchlässig ist oder dessen Lichtdurchlässigkeit wesentlich geringer ist als das Material, aus dem die Behälter 1 gefertigt sind.

Die Erfindung wurde voranstehend an einem Ausführungsbeispiel beschrieben. Es versteht sich, dass zahlreiche Änderungen sowie Abwandlungen möglich sind. So wurde vorstehend davon ausgegangen, dass die stark gebündelten Lichtstrahlen 30 von Lichtquellen 29 erzeugt werden, die seitlich von dem jeweils an der Mess- und/oder Kontrollposition 8.1 befindlichen Behälter angeordnet sind, und zwar derart, dass die Lichtstrahlen 30 schräg von unten her auf den jeweiligen Behälter 1 bzw. auf dessen Umfangswand auftreffen, und zwar im oberen Bereich des Behälters 1, z.B. im Bereich der Behälterschulter oder Behälterbrust. Grundsätzlich sind auch Ausführungen denkbar, bei denen die Beleuchtung des jeweils zu überprüfenden Originalitätssicherungsringes 4 von hinten durch den Behälterboden erfolgt. Weiterhin ist es auch möglich, mehrere Lichtquellen 29 zur Beleuchtung desjenigen Bereichs des Originalitätssicherungsringes 4 vorzusehen, der mit der Kamera 22 oder mit einer anderen opto-elektrischen Sensoreinheit erfasst werden soll.

Vorstehend wurde davon ausgegangen, dass das opto-elektrische System zur Erfassung des Zustands des jeweiligen Originalitätssicherungsringes 4 ein Kamerasystem mit einer elektronischen Kamera 22 ist.

Die optischen Strahlumlenkelemente zur Erzielung einer 360°-Erfassung oder 360°-Abbildung des jeweiligen Originalitätssicherungsringes 4 wurden vorstehend als Spiegel 24, 25 und 26 beschrieben. Es können aber auch andere optische Strahlumlenkelemente verwendet werden.

### Bezugszeichenliste

- 1: Behälter
- 1.1: Behälterhals
- 2: Behälterverschluss
- 3: kappenartiger Verschlusskörper
- 4: Originalitätssicherungsring
- 5: Sollbruchlinie
- 6: Rast an Originalitätssicherungsring 4
- 7: ringartiger Vorsprung am Behälterhals 1.1
- 8: Inspektionsvorrichtung
- 8.1: Mess- und/oder Kontrollposition
- 9: Transporteur
- 10: Sensorsystem
- 11: Bildverarbeitung
- 12: Gehäuse
- 13: Gehäuseunterteil
- 14: Gehäuseoberteil
- 15: Schnellverschluss
- 16: Boden
- 17: Umfangswand
- 18: obere Wand
- 19: Umfangswand
- 20: Fußelement
- 21: Traggestell
- 22: Kamera
- 23: Optik
- 24: Spiegelelement
- 24.1: Spiegel- oder Reflexionsfläche
- 25: Spiegel
- 25.1: Spiegel- oder Reflexionsfläche
- 26: Spiegel
- 26.1: Spiegel- oder Reflexionsfläche
- 27: Fenster
- 28: Öffnung
- 29: Lichtquelle
- 30: gebündelter Lichtstrahl
- BA: Behälterachse
- OA: optische Achse
- N: Höhenniveau

## Patentansprüche

1. Verfahren zum Überprüfen von mit einem Füllgut gefüllten und mit einem Behälterverschluss (2) maschinell verschlossenen Flaschen oder dergleichen Behältern (1) aus einem transluzenten Material, beispielsweise aus Glas oder einem glasartigen Kunststoff, z.B. PET, wobei die Behälterverschlüsse (2) jeweils einen Originalitätssicherungsring (4) aufweisen, der bei verschlossenem Behälter (1) an diesem form- und/oder kraftschlüssig derart gehalten ist, dass ein Öffnen des Behälters (1) nur unter Abtrennen und/oder Zerstören des Originalitätssicherungsringes (4) möglich ist, wobei die Behälter (1) nach dem Füllen und Verschließen mit wenigstens einem opto-elektrischen Sensorsystem (10) auf die Unversehrtheit ihres Originalitätssicherungsringes (4) überprüft werden und wobei der Originalitätssicherungsring (4) für das bildliche Erfassen mit wenigstens einem gebündelten Lichtstrahl (30) zumindest einer Lichtquelle (29), vorzugsweise mit einem stark gebündelten Lichtstrahl (30) beleuchtet wird, wobei das Beleuchten des Originalitätssicherungselementes (4) vom Inneren des jeweiligen Behälters (1) her erfolgt,
**dadurch gekennzeichnet, dass**
der Originalitätssicherungsring (4) über ein mehrere optische Strahlumlenkelemente (24, 25, 26) aufweisendes optisches System mit einem einzigen opto-elektrischen Sensor an mehreren Bereichen gleichzeitig über seine gesamte Erstreckung in Form einer 360°-Erfassung oder - Abbildung bildlich erfasst wird.

2. Verfahren nach Anspruch 1, **dadurch gekennzeichnet, dass** die bildliche Erfassung des jeweiligen Originalitätssicherungsringes (4) mit einer einzigen elektronischen Kamera (22) des opto-elektrischen Sensorsystems (10) erfolgt.

3. Verfahren nach einem der vorhergehenden Ansprüche, **dadurch**
**gekennzeichnet, dass** der wenigstens eine von der Lichtquelle (29) ausgesandte Lichtstrahl (30) auf den jeweiligen Behälter (1) derart gerichtet ist, dass er auf einen Bereich einer Behälterumfangs- oder Mantelfläche auftrifft, der (Bereich) dem mit dem wenigstens einen opto-elektrischen Sensor (22) erfassten Bereich des Originalitätssicherungsringes (4) am Umfang des Behälters (1) gegenüberliegt.

4. Verfahren nach einem der vorhergehenden Ansprüche, **dadurch**
**gekennzeichnet, dass** die Richtung des wenigstens einen Lichtstrahls (30) zumindest außerhalb des Behälters (1) mit einer Behälterachse (BA) und/oder einer Achse des Behälterverschlusses (2) einen Winkel kleiner als 90° einschließt, der sich zu einem dem Behälterverschluss (2) gegenüber liegenden Behälterboden hin öffnet, und/oder
dass die Richtung des wenigstens einen Lichtstrahls (30) derart gewählt ist, dass dieser unter Berücksichtigung der Strahlbrechung an der Behälterwand und/oder an der Grenzfläche zwischen der Behälterwand und dem Füllgut direkt oder durch Reflexion an der Innenfläche des Behälters auf die Rückseite des Originalitätssicherungsringes (4) auftrifft.

5. Verfahren nach einem der vorhergehenden Ansprüche, **dadurch**
**gekennzeichnet, dass** der Lichtstrahl zum Beleuchten des Originalitätssicherungsringes (4) auf den Boden des Behälters gerichtet ist.

6. Verfahren nach einem der vorhergehenden Ansprüche, **dadurch**
**gekennzeichnet, dass** Behälter mit fehlerhaften Originalitätssicherungsringen (4) durch ein von dem Bildverarbeitungssystem (11) veranlasstes Signal ausgeschleust werden.

7. Verfahren nach einem der vorhergehenden Ansprüche, **dadurch**
**gekennzeichnet, dass** der jeweilige Originalitätssicherungsring (4) an einem kappenartigen Verschlusskörper (3) vorgesehen ist.

8. Inspektionsvorrichtung zum Überprüfen von mit einem Füllgut gefüllten und mit jeweils einem Behälterverschluss (2) maschinell verschlossenen Flaschen oder dergleichen Behältern (1) aus transluzentem Material, beispielsweise aus Glas oder transluzentem Kunststoff, wobei die Behälterverschlüsse (2) jeweils einen Originalitätssicherungsring (4) aufweisen, der bei verschlossenem Behälter (1) an diesem form- und/oder kraftschlüssig derart gehalten ist, dass ein Öffnen des Behälters (1) nur unter Abtrennen und/oder Zerstören des Originalitätssicherungsringes (4) möglich ist, mit wenigstens einem Transportelement (9), mit dem die Behälter (1) jeweils an eine Mess- und/oder Kontrollposition (8.1) bewegt werden, sowie mit einem opto-elektrischen Sensorsystem (10) zur bildlichen Erfassung jeweils eines Teilbereichs jedes an der Mess- und/oder Kontrollposition (8.1) befindlichen Behälters (1), wobei das opto-elektrische Sensorsystem (10) für eine bildliche Erfassung zumindest eines Teilbereichs des Originalitätssicherungsringes (4) des jeweils an der Mess- und/oder Kontrollposition (8.1) befindlichen Behälters (1) ausgebildet ist, wobei wenigstens eine Lichtquelle (29) zum Aussenden von Licht in Form eines gebündelten Lichtstrahls (30) zum Beleuchten des von dem opto-elektrischen Sensorsystem (10) zu erfassenden Originalitätssicherungsringes (4) vorgesehen ist, wobei der Lichtstrahl (30) der wenigstens einen Lichtquelle (29) derart auf den jeweils an der Mess- und/oder Kontrollposition (8.1) befindlichen Behälter (1) gerichtet ist, dass der Originalitätssicherungsring (4) von der Behälterinnenseite her beleuchtet ist,
**dadurch gekennzeichnet, dass**
das opto-elektrische Sensorsystem (10) ein optisches System mit mehreren Strahlumlenkelementen (24, 25, 26) aufweist, und dass das optisches System einem gemeinsamen opto-elektrischen Sensor zugeordnet und derart ausgebildet ist, dass mehrere Teilbereiche des jeweiligen Originalitätssicherungsringes auf seiner gesamten Erstreckung in Form einer 360°-Erfassung über das optische System gleichzeitig von dem einen opto-elektrischen Sensor (22) bildlich erfasst werden.

9. Inspektionsvorrichtung nach Anspruch 8, **dadurch gekennzeichnet, dass** der gemeinsame opto-elektrische Sensor, eine elektrische Kamera (22) ist.

10. Inspektionsvorrichtung nach Anspruch 8 oder 9, **dadurch gekennzeichnet, dass** das optische System gegenüber der Mess- und/oder Kontrollposition (10) seitlich versetzt wenigstens ein erstes optisches Strahlumlenkelement (26) und an dieses im Strahlengang anschließend wenigstens ein zweites optisches Strahlumlenkelement (25) aufweist, dass die Anordnung bestehend aus dem ersten und zweiten Strahlumlenkelement (26, 25) mehrfach, beispielsweise vierfach um die Mess- und/oder Kontrollposition (8.1) verteilt vorgesehen ist, und dass im Strahlengang zwischen den zweiten Strahlumlenkelementen (25) und dem opto-elektrischen Sensor (22) wenigstens ein drittes optisches Strahlumlenkelement, vorzugsweise ein für sämtliche Anordnungen aus dem ersten und zweiten Strahlumlenkelementen (25, 26) gemeinsames drittes optisches Strahlumlenkelement (24) vorgesehen ist, wobei das dritte Strahlumlenkelement (24) vorzugsweise in einer optischen Achse (OA) des opto-elektrischen Sensors (22, 23) angeordnet ist, die zugleich auch eine Achse der Mess- und/oder Kontrollposition (8.1) ist.

11. Inspektionsvorrichtung nach Anspruch 10, **dadurch gekennzeichnet, dass** unterhalb des ersten optischen Strahlumlenkelementes (26) die wenigstens eine Lichtquelle (29) zum Aussenden wenigstens eines Lichtstrahls (30) vorgesehen ist, und dass die Richtung des jeweiligen Lichtstrahls (30) in einer gemeinsamen Ebene mit der Achse der Mess- und/oder Kontrollposition (8.1) liegt und/oder mit dieser Achse einen Winkel kleiner 90° einschließt, der sich zu einer Ebene hin öffnet, auf der die Behälter (1) mit ihrem dem jeweiligen Behälterverschluss (2) gegenüber liegenden Behälterboden durch die Inspektionsvorrichtung (8) bewegt werden.

12. Inspektionsvorrichtung nach einem der Ansprüche 8-11, **dadurch gekennzeichnet, dass** die ersten Strahlumlenkelemente (26) und/oder die Lichtquellen (29) jeweils in einem säulenartigen Fußelement (20) untergebracht sind, welches seitlich von der Bewegungsbahn der Behälter (1) angeordnet und Teil einer Tragkonstruktion für ein oberhalb der Bewegungsbahn der Behälter (1) angeordnetes Gehäuse (12) zur Aufnahme zumindest des wenigstens einen opto-elektrischen Sensors (22) ist.

13. Inspektionsvorrichtung nach einem der vorhergehenden Ansprüche, **dadurch gekennzeichnet, dass** sie Bestandteil einer Anlage zumindest zum Füllen, Verschließen, Etikettieren und Verpacken von Behältern (1) ist und in dieser Anlage in einer Transportrichtung (A) der Behälter vor einer Maschine für das Verpacken, vorzugsweise vor einer Maschine für das Etikettieren angeordnet ist.

## Claims

1. Method for testing bottles or like containers (1), filled with a filling material and mechanically closed by means of a container closure (2), made of a translucent material, such as glass or a glass-like plastic, e.g. PET, wherein the container closures (2) in each case comprise an originality security ring (4), which, with the container (1) in the closed state, is held on the container in an interlocking and/or force-fit manner in such a way that opening the container (1) is possible only by separating and/or destroying the originality security ring (4), wherein the containers (1), after filling and closing, are tested with at least one optoelectronic sensor system (10) for intactness of their originality security ring (4), and wherein the originality security ring (4) is illuminated for the imaging detection by at least one bundled light beam (30) from at least one light source (29), preferably with a powerfully bundled light beam (30), wherein the lighting of the originality security element (4) is carried out from the inner side of the respective container (1),
**characterised in that**
the originality security ring (4) is detected as an image by means of an optical system comprising beam deflection elements (24, 25, 26), with one single optoelectronic sensor, at several regions simultaneously over its entire extension, in the form of 360° detection or imaging.

2. Method according to claim 1, **characterised in that** imaging detection of the respective originality security element (4) is carried out with one single electronic camera (22) of the optoelectronic sensor system (10).

3. Method according to claim 4, **characterised in that** the at least one light beam (30) emitted from the light source (29) is directed onto the respective container (1) in such a way that it impinges onto a region of a container circumferential or casing surface, which (region) is located opposite the region of the originality securing element (4) which is detected by the at least one optoelectronic sensor (22) at the circumference of the container (1).

4. Method according to claim 4 or 5, **characterised in that** the direction of the at least one light beam (30), at least outside the container (1), encloses an angle with a container axis (BA) and/or an axis of the container closure (2) of less than 90°, which opens towards a container base located opposite the container closure (2), and/or
that the direction of the at least one light beam (30) is selected in such a way that, taking account of the beam refraction at the container wall and/or at the boundary surface between the container wall the filling material impinges directly or by reflection at the inner surface of the container onto the rear side of the originality securing element (4).

5. Method according to any one of the preceding claims, **characterised in that** the light or the light beam for lighting the originality securing element (4) is directed onto the base of the container.

6. Method according to any one of the preceding claims, **characterised in that** containers with defective originality securing elements (4) are separated out by a signal generated by the image processing system (11).

7. Method according to any one of the preceding claims, **characterised in that** the respective originality securing element (4) is an originality security ring (4) provided at a closure body (3), preferably in the form of a cap.

8. Inspection device for testing bottles or like containers (1), filled with a filling material and mechanically closed in each case by means of a container closure (2), wherein the container closures (2) comprise in each case an originality security ring (4), which, with the container (1) in the closed state, is held on the container in an interlocking and/or force-fit manner in such a way that opening the container (1) is possible only by separating and/or destroying the originality security ring (4), with at least one transport element (9), with which the containers (1) are moved in each case at a measuring position and/or monitoring position (8.1), as well as with an optoelectronic sensor system (10) for the imaging detection in each case of a part region of each container (1) which is located at the measuring position and/or monitoring position (8.1), wherein the optoelectronic sensor system (10) is configured for an imaging detection of at least one part region of the originality securing element (4) of the container (1) which is located in each case at the measuring position and/or monitoring position (8.1), **characterised by** at least one light source (29) for the emitting of light, preferably in the form of a bundled light beam (30) for the lighting of the originality securing element (4) which is to be detected by the optoelectronic sensor system (10), wherein, with the use of containers (1) made of translucent material, for example of glass or translucent plastic, the light beam (30) from the at least one light source (29) is directed onto the container (1) located at the measuring point and/or monitoring position (8.1) in such a way that the originality securing element (4) is lighted from the inner side of the container,
**characterised in that**
the optoelectronic sensor system (10) comprises an optical system with a plurality of beam deflection elements (24, 25, 26), and that the optical system is assigned to a common optoelectronic sensor, and is configured in such a way that several part regions of the respective originality security ring are image-detected over its entire extent, in the form of a 360° detection by means of the optical system, simultaneously by the one optoelectronic sensor (22).

9. Inspection device according to claim 8, **characterised in that** the common optoelectronic sensor is an electrical camera (22).

10. Inspection device according to claim 8 or 9, **characterised in that** the optical system is laterally offset in relation to the measuring position and/or monitoring position (10), and comprises at least one first optical beam deflection element (26), and, following this, in the beam path, comprises at least one second optical beam deflection element (25), that the arrangement consisting of the first and second beam deflection element (26, 25) is provided distributed several times, for example four times, around the measurement position and/or monitoring position (8.1), and that provided in the beam path, between the second beam deflection element (25) and the optoelectronic sensor (22), is at least one third optical beam deflection element, preferably a third optical beam deflection element (24) which is common to all the arrangements of the first and second beam deflection elements (24, 26), wherein the third beam deflection element (24) is preferably arranged in an optical axis (OA) of the optoelectronic sensor (22, 23), which at the same time is an axis of the measuring position and/or monitoring position (8.1).

11. Inspection device according to claim 13, **characterised in that**, provided beneath the first optical beam deflection element (26) in each case, is at least one light source (29) for the emitting of at least one light beam (30), and that the direction of the respective light beam (30) lies in a common plane with the axis of the measuring position and/or monitoring position (8.1) and/or encloses with this axis an angle of less than 90°, which opens towards a plane on which the containers (1) are moved through the inspection device (8) with their container base located opposite the respective container closure (2).

12. Inspection device according to any one of claims 8-11, **characterised in that** the first beam deflection elements (26) and/or the light sources (29) are in each case accommodated in a column-type foot element (20), which is arranged laterally from the movement path of the containers (1), and is a part of a carrying structure for a housing (12) arranged above the movement path of the containers (1) for receiving the at least one optoelectronic sensor (22).

13. Inspection device according to any one of the preceding claims, **characterised in that** it is a constituent part of a system for at least filling, closing, labelling, and packing of containers (1), and is arranged in this system, in a transport direction (A) of the containers, before a machine for the packing, and preferably before a machine for the labelling.

## Revendications

1. Procédé de vérification de bouteilles ou récipients similaires (1) remplis d'un produit de remplissage et fermés par machine avec une fermeture de récipient (2) en un matériau translucide, par exemple en verre ou une matière plastique de type verre, par exemple en PET, les fermetures de récipient (2) présentant respectivement une bague de garantie (4) qui est maintenue en cas de récipient (1) fermé sur celui-ci par complémentarité de formes et/ou à force de telle manière qu'une ouverture du récipient (1) ne soit possible qu'en séparant et/ou en détruisant la bague de garantie (4), les récipients (1) étant vérifiés après le remplissage et la fermeture avec au moins un système de capteur optoélectrique (10) quant à l'intégrité de leur bague de garantie (4) et la bague de garantie (4) étant éclairée pour la détection visuelle avec au moins un faisceau lumineux (30) concentré au moins d'une source de lumière (29), de préférence avec un faisceau lumineux (30) très concentré, l'éclairage de l'élément de garantie (4) étant effectué depuis l'intérieur du récipient (1) concerné,
**caractérisé en ce que**
la bague de garantie (4) est détectée visuellement par le biais d'un système optique présentant plusieurs éléments de renvoi de faisceau (24, 25, 26) optiques avec un seul capteur optoélectrique au niveau de plusieurs zones simultanément sur son étendue entière sous la forme d'une détection ou illustration à 360°.

2. Procédé selon la revendication 1, **caractérisé en ce que** la détection visuelle de la bague de garantie (4) concernée est effectuée avec une seule caméra électronique (22) du système de capteur optoélectrique (10).

3. Procédé selon l'une quelconque des revendications précédentes, **caractérisé en ce que** l'au moins un faisceau lumineux (30) émis par la source de lumière (29) est dirigé vers le récipient (1) concerné de telle manière qu'il rencontre une zone d'une surface enveloppe ou périphérique de récipient, laquelle (zone) fait face à la zone détectée avec l'au moins un capteur optoélectrique (22) de la bague de garantie (4) sur la périphérie du récipient (1).

4. Procédé selon l'une quelconque des revendications précédentes, **caractérisé en ce**
**que** la direction de l'au moins un faisceau lumineux (30) forme, au moins en dehors du récipient (1) avec un axe de récipient (BA) et/ou un axe de la fermeture de récipient (2), un angle inférieur à 90° qui s'ouvre vers un fond de récipient se trouvant en face de la fermeture de récipient (2), et/ou
**que** la direction de l'au moins un faisceau lumineux (30) est choisie de telle manière que celui-ci rencontre le côté arrière de la bague de garantie (4) en tenant compte de la réfraction du faisceau sur la paroi de récipient et/ou sur la surface limite entre la paroi de récipient et le produit de remplissage directement ou par réflexion sur la surface intérieure du récipient.

5. Procédé selon l'une quelconque des revendications précédentes, **caractérisé en ce que** le faisceau lumineux est dirigé pour l'éclairage de la bague de garantie (4) vers le fond du récipient.

6. Procédé selon l'une quelconque des revendications précédentes, **caractérisé en ce que** des récipients avec des bagues de garantie (4) défectueuses sont exclus par un signal amené par le système de traitement d'image (11).

7. Procédé selon l'une quelconque des revendications précédentes, **caractérisé en ce que** la bague de garantie (4) concernée est prévue sur un corps de fermeture (3) de type bouchon.

8. Dispositif d'inspection pour la vérification de bouteilles ou récipients similaires (1) remplis d'un produit de remplissage et fermés par machine avec respectivement une fermeture de récipient (2) en un matériau translucide, par exemple en verre ou une matière plastique translucide, les fermetures de récipient (2) présentant respectivement une bague de garantie (4) qui est maintenue en cas de récipient fermé (1) sur celui-ci par complémentarité de formes et/ou à force de telle manière qu'une ouverture du récipient (1) ne soit possible qu'en séparant et/ou en détruisant la bague de garantie (4), avec au moins un élément de transport (9), avec lequel les récipients (1) sont déplacés respectivement dans une position de mesure et/ou de contrôle (8.1), ainsi qu'avec un système de capteur optoélectrique (10) pour la détection visuelle respectivement d'une zone partielle de chaque récipient (1) se trouvant dans la position de mesure et/ou de contrôle (8.1), le système de capteur optoélectrique (10) étant réalisé pour une détection visuelle au moins d'une zone partielle de la bague de garantie (4) du récipient (1) se trouvant respectivement dans la position de mesure et/ou de contrôle (8.1), au moins une source de lumière (29) étant prévue pour l'émission de lumière sous la forme d'un faisceau lumineux (30) concentré pour l'éclairage de la bague de garantie (4) à détecter par le système de capteur optoélectrique (10), le faisceau lumineux (30) de l'au moins une source de lumière (29) étant dirigé vers le récipient (1) se trouvant respectivement dans la position de mesure et/ou de contrôle (8.1) de telle manière que la bague de garantie (4) soit éclairée depuis le côté intérieur de récipient,
**caractérisé en ce que**
le système de capteur (10) optoélectrique présente un système optique avec plusieurs éléments de renvoi de faisceau (24, 25, 26), et que le système optique est associé à un capteur optoélectrique commun et est réalisé de telle manière que plusieurs zones partielles de la bague de garantie concernée soient détectées visuellement sur son étendue entière sous la forme d'une détection à 360 degrés par le biais du système optique simultanément par l'un capteur (22) optoélectrique.

9. Dispositif d'inspection selon la revendication 8, **caractérisé en ce que** le capteur optoélectrique commun est une caméra électrique (22).

10. Dispositif d'inspection selon la revendication 8 ou 9, **caractérisé en ce que** le système optique présente en déport latéral par rapport à la position de mesure et/ou de contrôle (10) au moins un premier élément de renvoi de faisceau (26) optique et de manière contiguë à celui-ci dans la trajectoire du faisceau au moins un deuxième élément de renvoi de faisceau (25) optique, **en ce que** l'agencement se composant du premier et du deuxième élément de renvoi de faisceau (26, 25) est prévu réparti de manière multiple, par exemple de manière quadruple autour de la position de mesure et/ou de contrôle (8.1), et **en ce que** dans la trajectoire du faisceau entre les deuxièmes éléments de renvoi de faisceau (25) et le capteur optoélectrique (22), au moins un troisième élément de renvoi de faisceau optique, de préférence un troisième élément de renvoi de faisceau (24) optique commun à tous les agencements des premier et deuxième éléments de renvoi de faisceau (25, 26) est prévu, le troisième élément de renvoi de faisceau (24) étant agencé de préférence dans un axe optique (OA) du capteur optoélectrique (22, 23) qui est à la fois aussi un axe de la position de mesure et/ou de contrôle (8.1).

11. Dispositif d'inspection selon la revendication 10, **caractérisé en ce que** l'au moins une source de lumière (29) est prévue pour l'émission de l'au moins un faisceau lumineux (30) sous le premier élément de renvoi de faisceau (26) optique, et **en ce que** la direction du faisceau lumineux (30) concerné se trouve dans un plan commun avec l'axe de la position de mesure et/ou de contrôle (8.1) et/ou forme avec cet axe un angle inférieur à 90° qui s'ouvre vers un plan, sur lequel les récipients (1) sont déplacés avec leur fond de récipient en face de la fermeture de récipient (2) concernée par le dispositif d'inspection (8).

12. Dispositif d'inspection selon l'une quelconque des revendications 8 à 11, **caractérisé en ce que** les premiers éléments de renvoi de faisceau (26) et/ou les sources de lumière (29) sont logées respectivement dans un élément de pied (20) de type colonne qui est agencé latéralement par rapport à la bande de déplacement des récipients (1) et fait partie d'une construction porteuse pour un boîtier (12) agencé au-dessus de la bande de déplacement des récipients (1) pour la réception au moins de l'au moins un capteur optoélectrique (22).

13. Dispositif d'inspection selon l'une quelconque des revendications précédentes, **caractérisé en ce qu'**il fait partie d'une installation au moins pour le remplissage, la fermeture, l'étiquetage et l'emballage de récipients (1) et le récipient est agencé dans cette installation dans un sens de transport (A) avant une machine pour l'emballage, de préférence avant une machine pour l'étiquetage.
